# EUROPEAN PATENT SPECIFICATION

(11) **EP 3 637 073 B1**
(45) Date of publication and mention of the grant of the patent: **21.12.2022**
(21) Application number: 18199374.2
(22) Date of filing: 09.10.2018
(51) Int. Cl.: G01K 1/14, G01N 3/42, G01K 7/42

(54) **PROCESS FOR THE TEMPERATURE MEASUREMENT FOR A HIGH TEMPERATURE MICRO-DEFORMATION DEVICE**
VERFAHREN ZUR TEMPERATURMESSUNG FÜR EINE HOCHTEMPERATUR-MIKROVERFORMUNGSVORRICHTUNG
PROCÉDÉ DE MESURE DE LA TEMPÉRATURE POUR DISPOSITIF DE MICRODÉFORMATION À HAUTE TEMPÉRATURE

(43) Date of publication of application: 15.04.2020
(73) Proprietor: Max-Planck-Institut für Eisenforschung GmbH, 40237 Düsseldorf (DE)
(72) Inventor: Kirchlechner, Christoph, 40235 Düsseldorf (DE); Gonzalez, Ivan, 47877 Willich (DE); Arigela, Viswanadh Gowtham, 40227 Düsseldorf (DE); Kölling, Michael, 47269 Duisburg (DE)
(74) Representative: Janke Scholl Patentanwälte PartG mbB

(56) References cited:
- GB-A- 1 422 735
- SEUNGBAE PARK ET AL: "Temperature dependency of coefficient of hygroscopic swelling of molding compound", ELECTRONIC COMPONENTS AND TECHNOLOGY CONFERENCE, 2009. ECTC 2009. 59TH, IEEE, PISCATAWAY, NJ, USA, 26 May 2009 (2009-05-26), pages 172-179, XP031474914, ISBN: 978-1-4244-4475-5
- IWABUCHI A ET AL: "THE DEVELOPMENT OF A VICKERS-TYPE HARDNESS TESTER FOR CRYOGENIC TEMPERATURES DOWN TO 4.2 K", CRYOGENICS, ELSEVIER, KIDLINGTON, GB, vol. 36, no. 2, 1 February 1996 (1996-02-01), pages 75-81, XP000552292, ISSN: 0011-2275, DOI: 10.1016/0011-2275(96)83806-9
- "IEEE Standard Design Tests for High-Voltage (1000 V) Fuses and Accessories;IEEE Std C37.41-2016 (Revision of IEEE Std C37.41-2008)", IEEE STANDARD, IEEE, PISCATAWAY, NJ, USA, 9 December 2016 (2016-12-09), pages 1-141, XP068113031, [retrieved on 2016-12-19]
- ARIGELA V G ET AL: "Setup of a microscale high temperature loading rig for micro-fracture mechanics", CONFERENCE : EUROMAT 2017, THESSALONIKI, GREECE. 2017-09-17 - 2017-09-22, ?, GR, 17 September 2017 (2017-09-17), pages 1-18, XP009512412,

## Description

Present invention relates to a process for the temperature detection of a sample the temperature of which cannot be measured directly and a device for measuring physical properties other than the temperature of a sample using two or more identical samples and a device for carrying out the process.

Nano- and micromechanical characterization as an approach in understanding the materials of this generation is already well established. Apart from the microstructural features in materials, length scales of many components in the present electronic systems have shrinked by many orders of magnitudes. Micromechanical testing can reveal the deformation and fracture behaviour of these systems in their service conditions. The complete comprehension of these components is only possible after probing their response with varying temperatures. This facilitates a clear understanding of the qualitative and quantitative changes in the deformation processes of these systems at their working temperatures.

Experiments of this kind need dedicated setups. The state of the art high temperature microdeformation units are equipped with high to ultra-high vacuum systems, visual aids, robust heating systems for both tip and sample and cooling systems.

Seungbae Park et al. disclose in "Temperature dependency of coefficient of hygroscopic swelling of molding compound", Electronic Components and Technology Conference, 2009. ECTC 2009. 59TH, IEEE, PISCATAWAY, NJ, USA, 26 May 2009 (2009-05-26), pages 172-179 (ISBN: 978-1-4244-4475-5), the measurement of the temperature dependency of the coefficient of hygroscopic swelling of a molding compound. On page 173 the sample preparation and the experimental setup for the digital image correlation (DIC) technique are disclosed. The DIC is an optical deformation measurement technique in which both in-plane and out-cf-plane deformations can be computed by comparing the digital images of the target object captured at a full field reference and subsequent deformed stages. It is disclosed that a thermocouple is mounted to a dummy sample placed near the test sample as means of monitoring the temperature of the sample during thermal loading.

Iwabuchi A. et al. disclose in "The development of a Vickers-Type hardness tester for cryogenic temperatures down to 4.2 K", CRYOOENICS, Elsevier, Vol. 3e·:· No. 2; 1 February 1996, pages 75-81, ISSN: 0011-2275, 001: 10.1016/0011-2275(96)83806-9 a sample preparation wherein a reference sample is used to enable proper monitoring of the temperature of the samples under test.

One aspect in these setups that can improve the reliability is the temperature measurement approach applied. Most of the successful known testing arrangements record the temperatures of the sample(s) near the heating sources but not at the respective surfaces. Measuring the temperatures at the position of interest is prevented due to (i) the small region of interest and (ii) undesired alterations of the microstructure of the material during the application of the thermocouples. Today the contact temperatures of the tip and the sample are assumed according to these temperatures directly or with various additional approaches of temperature matching like thermal displacement drift and indenter temperature shift measurements. These approaches can result in an error of 5-40% in the recorded temperature to the actual contact temperature especially at higher working temperatures. Some platforms tried to overcome these anomalies by calibrating the indenter to know the contact temperatures more precisely by approaches like indenting the thermocouples. Even these approaches may not be reliable (a) at higher temperatures, (b) with different materials of tips and samples and (c) with more interfaces by introduction of glues for sample fixation. The time required for temperature matching and thermal stabilization of current systems is in the order of tens of hours to days. These long stabilization times are disadvantageous for the micro specimens and the tips on the platforms.

Object of present invention is to provide a process with which estimating the temperature of a sample the temperature of which cannot be measured directly is possible and estimated easily with good reliability and short stabilization times.

Subject matter of present invention is a process for the temperature detection of a sample the temperature of which cannot be measured directly in a device for measuring mechanical properties using two or more identical samples and a localised heat source (6), at least one of the two or more identical samples being a mirror sample and more at least another one of the two or more identical samples being a working sample, wherein
- the at least one mirror sample and the at least one working sample are arranged in the device (1) so that they are equidistant from the heat source (6) and so that the heat source (6) is symmetrically centered between the at least one mirror sample and the at least one working sample,
- the at least one mirror sample and the at least one working sample are heated simultaneously to the same temperature,
- the temperature of the at least one mirror sample is measured while deformation experiments are carried out at the at least one working samples.

The process of present invention enables to estimate the temperature of sample the temperature of which cannot measured directly with good reliability and in the short time. According to present invention two identical samples are used. Within present invention "identical samples" mean that the samples have the same size and composition. One essential feature of present invention is that the samples have the same surrounding, this can be achieved by arranging the samples symmetrically. While the temperature is measured at one sample acting as the mirror sample, the physical experiments are carried out at the other sample(s), also called working sample(s). According to the process of present invention there can be used one or more working sample(s). In the following only the singular form sample is used although one sample or more mirror samples and working samples can be used. Since the samples are arranged symmetrically they have the same surrounding. Usually the surface temperature of the mirror sample is measured. From the temperature measured at the mirror sample can be referred to the temperature of the sample(s) with which the physical experiments have been carried out.

The process of present invention is suitable for all processes wherein physical properties have to be measured or physical experiments have to be carried out at a defined temperature and wherein the measurement of the temperature of the sample cannot be carried out simultaneously or wherein it is difficult to measure the temperature precisely. The process of present invention is especially advantageous for micromechanical experiments, i.e. experiments examining the mechanical properties of the material of the sample consists of, such as micro-fracture mechanics, micro tensile experiments, micro bending and compression experiments. The inventive process is especially suitable for high temperatures, for example at temperatures between ambient temperatures and 600°C.

As explained above the process of present invention is suitable for samples in the micro scale, for example for thin films, micro cantilever beams, micro compression pillars etc in the micro scale, especially for samples having a size in the range of 1 to 30 µm.

When carrying out the process of present invention of the samples are heated simultaneously with the same heating device. According to the present invention one heating device is used for all samples, i.e. for the mirror sample and for the working sample with which the experiments are carried out. According to the invention, the heating device is arranged in the centre between the samples. From the fact that the samples are arranged in the same measurement environment and heated in the same way manner, it can be concluded that the sample with which the experiments are carried out has the same temperature as the sample of the temperature of which is measured.

Another subject of present invention is a device for the detection of mechanical properties of samples as defined in claim 2.

The device of present invention is suitable for carrying out experiments and measurements over a broad size range, even in the macro-scale and in the micro-scale. Experiments in the micro-scale can be achieve with high accuracy and reliability.

In order to ensure that the measurement surrounding of all sample holders is the same, the sample holders are arranged symmetrically.

According to the invention, the heating system is arranged in the centre between the samples. An example for a suitable heating system is a laser. For safety reasons the device may also comprise a cooling system.

In a preferred embodiment of present invention the device comprise two or more sample supports with at least two sample holders in each, a measurement unit for measuring the temperature of the sample in one sample holder and one or more unit(s) for carrying out physical experiments. That means the sample supports has a counter body, at both sample supports the same measurements can be carried out. Depending on the requirements for the measurement the sample supports can be moved in relation to another. In case at all sample supports the same experiments are carried out, from the results can be referred to the accuracy of the obtained results.

In order to improve the accuracy of the experiments and to exclude external influences it is preferred to put the device into a closed chamber, preferably into a vacuum chamber. Such a vacuum chamber may comprise one or more of the devices of present invention.

The invention is further illustrated by the attached figures, wherein
- Fig. 1: shows a sample holder according to present invention;
- Fig. 2: shows a perspective view of the sample holder of Fig. 1 attached to plates,
- Fig. 3: shows a side view of two devices 1 (cut along line A - A) according to Fig. 2 arranged in a measurement chamber,
- Fig. 4: shows a schematic view of the device of fig. 1 with the temperature measuring points,
- Fig. 5: shows a schematic view of the device of fig. 1 with the temperature measuring points and the ideal thermal profile,
- Fig. 6: (a) Heating cycles with lasers illustrating the stabilization cycles in the left (counter body) and right sample holder, (b) Magnified view of the stabilized temperatures in Fig (a),
- Fig. 7: Thermal profiles attained by heating the samples with lasers. Magnified section showing the scatter in the error precisely,
- Fig. 8: (a) Time scale showing the time taken for the stabilization of the working and reference sample on the sample holder (right) (b) Magnified view of the stabilized region,
- Fig. 9: Engineering Stress-Strain diagram of Cu thin films at different temperatures.

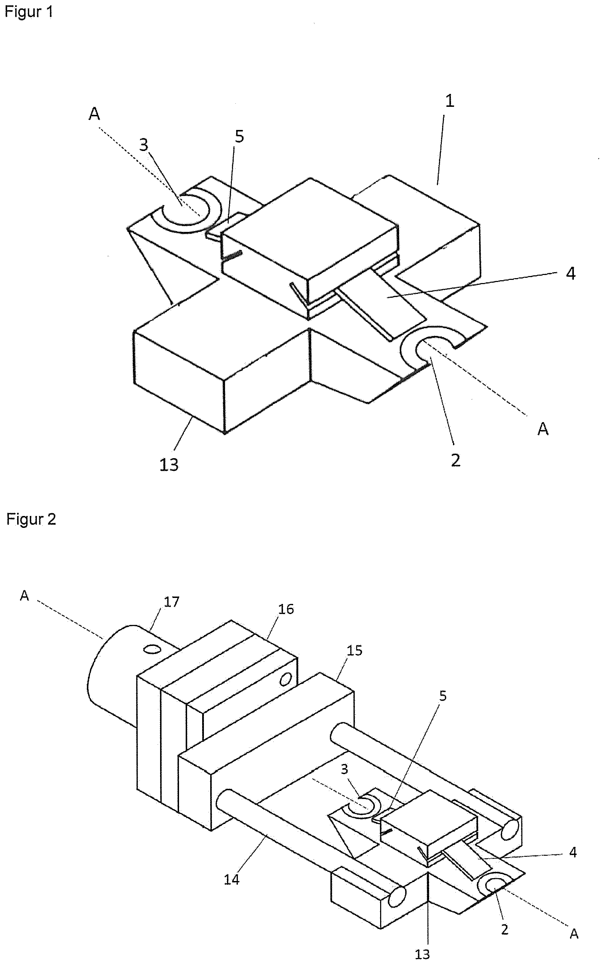

Fig. 1 shows a device 1 for the detection of physical properties of samples having two sample holders 2 and 3, one for the working sample and one for the mirror sample. In order to fasten the samples in the sample holders the device in fig. 1 has clamps 4 and 5. Depending on the form and structure of the samples any other setups for fastening the sample(s) can be used. The basic body of the device, also called sample support 13, has a symmetrical design with regard to the axis A - A extending between the sample holders. The heat is supplied via the bottom of the device (not shown in fig. 1).

Fig. 2 shows a miniature sample support 13. This support may have a size of 1.8×1.8×0.6 cm³ and may be manufactured from Incoloy^{®} 800 HT, a Nickel super alloy with high thermal conductivity (21.1 W/m°C at 600°C) for quick heat transfer and thermal stabilization. The support 13 comprises two different slots 2, 3 for the samples, once each for mirror sample and the working sample on which the experiments, for example deformation experiments, are carried out. The device according to present invention comprises two sample holders 2, 3 which are arranged equidistant from the heating source (not shown).

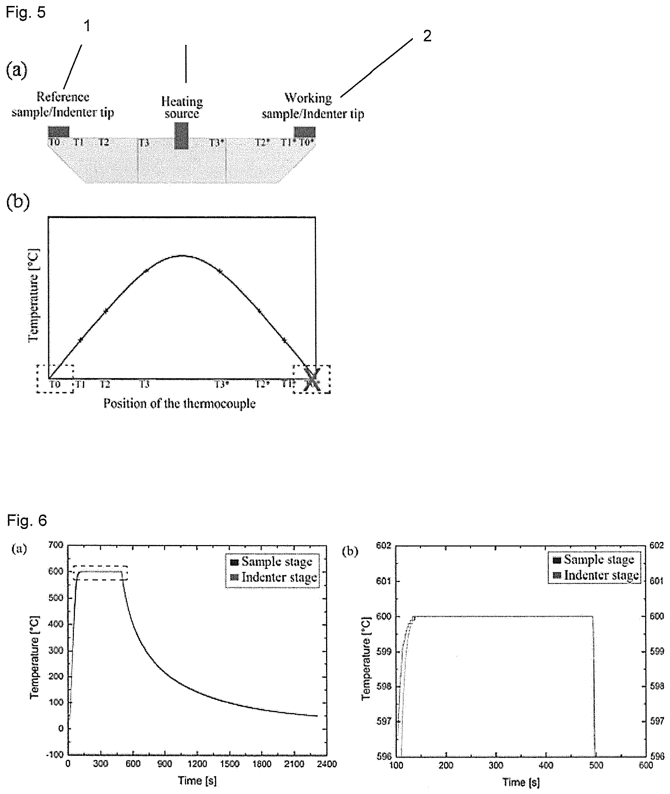

It is advantageous to avoid any interfaces such as glue interfaces which may influence the temperature distribution within the device in order to realize the ideal profile as in Fig. 5b below. Therefore, in a possible embodiment of present invention, a mechanical screw based metallic strip clamping system 4, 5 out of Inconel alloy is used to mount the samples. The heat flow from the sample support towards the sensitive electronic hardware is restricted by the use rods 14 having an extremely low thermal conductivity, for example of app. 3 W/mK. An example for a suitable material is Yttria stabilized Zirconia having a thermal conductivity of of 3 W/mK. From the thermal point of view these rods 14 are not visible, they do not have any influence on the temperature of the samples. A plate 15 is placed at the end of the rods for further restricting the heat transfer from the stage. The plate 15 may be made from glass ceramic such as Macor^{®}. The device may be attached to holder plates 16, 17 and can be arranged in a measurement chamber.

An additional copper braid (not shown) may be placed behind the rods which is connected to a water cooled copper block. This acts as a heat sink for the whole setup keeping the indenter hardware at cooler temperatures.

To realize the symmetric profile of the thermal gradients, it is beneficial to have a localized heat source, in particular identical heat sources., for example diode laser systems of spot size 0.4 mm form Dilas Laser systems are suitable to achieve this. The required power required is calculated from cooling curves of heating experiments of the stage conducted with a flame torch. The two stages, one holding the working sample and the mirror sample and the other holding the counter body and the counter body of the mirror sample are heated from the bottom at the center of the stage with two separate laser systems.

Type K (Chromel/Alumel) thermocouples of 0.25 mm diameter are positioned along the arms of the stage symmetrically on both sides with one placed directly on the surface of the reference sample/tip.

The two active reference thermocouples (the ones on the reference sample in sample stage and the reference counter body in the counter body stage), and the laser power controls are in turn connected to a Eurotherm controller providing a closed feedback loop to control the designated temperature and power.

The indenter system is a straining rig with a force and displacement resolutions of 10µm and 1nm respectively. The whole system is placed in a steel chamber capable of attaining vacuum in the range of 10⁻⁵-10⁻⁶ mbar. An inverted optical microscope may be used as a visual aid.

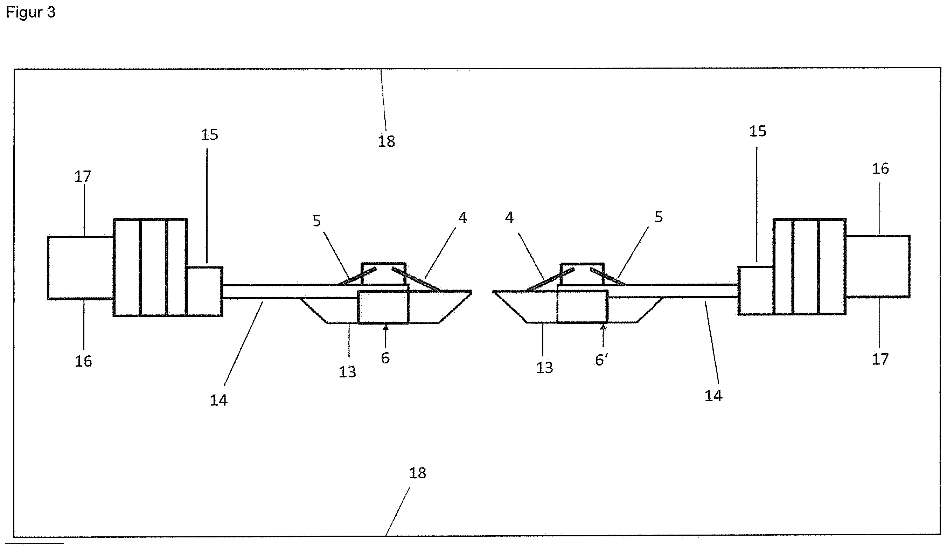

Fig. 3 shows a cut along line A - A of the device of Fig. 2 having two a sample support 1, each with a sample holder 2 for the working sample and a sample holder 3 for the mirror sample. The sample supports are located within a measurement chamber 18. The working sample 2 and the mirror sample 3 are situated on the two arms of the device 1. The samples are heated with a heating supply 6 and 6' located in centre of the bottom of the device 1. The distances to the samples are the same so that the samples are heated evenly to the same temperature. The temperature is measured at various measurement points as shown in Fig. 3.

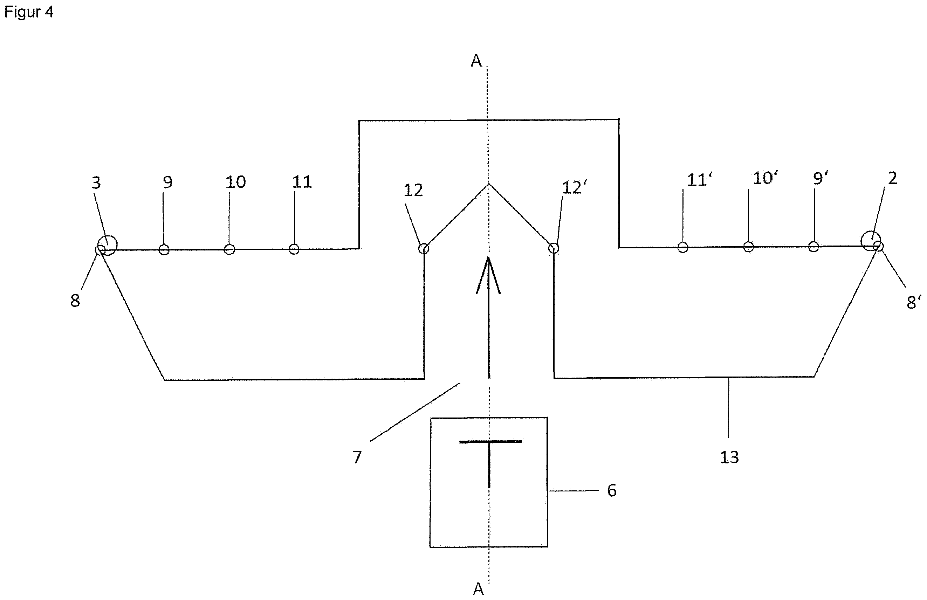

Fig. 4 shows a schematic view of the device of Fig. 1 with the temperature measuring points. The mirror sample 3 and the working sample 2 are placed at an equidistant position from the heating source 6, i.e. the heating source is symmetrically centered between both samples 2, 3. The centered heating source 6 heats the sample support 13 and the samples from the bottom and the heat flux towards the ends of the stage will ideally result in a thermal profile demonstrated in the Fig. 5b. With a stable heat source 3, the temperatures T0, T1, T2 and T3 on the side of the reference sample (measuring points 8, 9, 10, 11 and 12) will be identical to the temperatures T0*, T1*, T2* and T3* (measuring points 8', 9', 10', 11' and 12') on the side of the working sample. At the measuring points suitable thermocouples are arranged in order to measure the temperature at this points.

Fig. 5 shows also a schematic view of the device of fig. 1 with the temperature measuring points (T0, T1, T2 and T3, T0*, t1*, T2* and T3*) in Fig. 5a and the ideal thermal profile in Fig. 5b. This thermal profile shown in Fig. 5b allows the measurement of solely the temperature T0 surface of the mirror sample 3. The mirror sample 3 (called reference sample in Fig. 5a) and the working sample 2 are identical and it is assumed that the temperature of the surface of the working sample T0^{*} is the same as the temperature T0 of the surface of the mirror sample. This is backed by other recorded temperatures along the profile on both sides symmetrically. This guarantees an accurate prediction of the surface temperature of the sample T0^{*} without any thermocouple at the working sample and thereby avoiding any damage to the micron sized features of the sample.

### Experiments:

The experiments were carried out with two samples, one working sample and one mirror sample. However, within the scope of present invention also more than one working sample and more than one mirror sample can be used.

The samples are heated to a temperature of 600°C, the thermal stabilization can be seen the Fig. 6. The heating source can be suitable heating source known in the art which can heat the samples to a defined temperature, especially to temperatures above 200°C, preferably for heating the samples a laser is used. The temperature of the reference sample is measured with temperature sensors, in present experiments thermocouples are used. It was found that the feedback loop between the laser power input and the reference thermocouples resulted in heating and thermal stabilization of both the stages in less than 10 minutes. The temperatures of the stages with respect to reference thermocouples are stable and accurate to 0.1 °C (the resolution limit of the thermocouples).

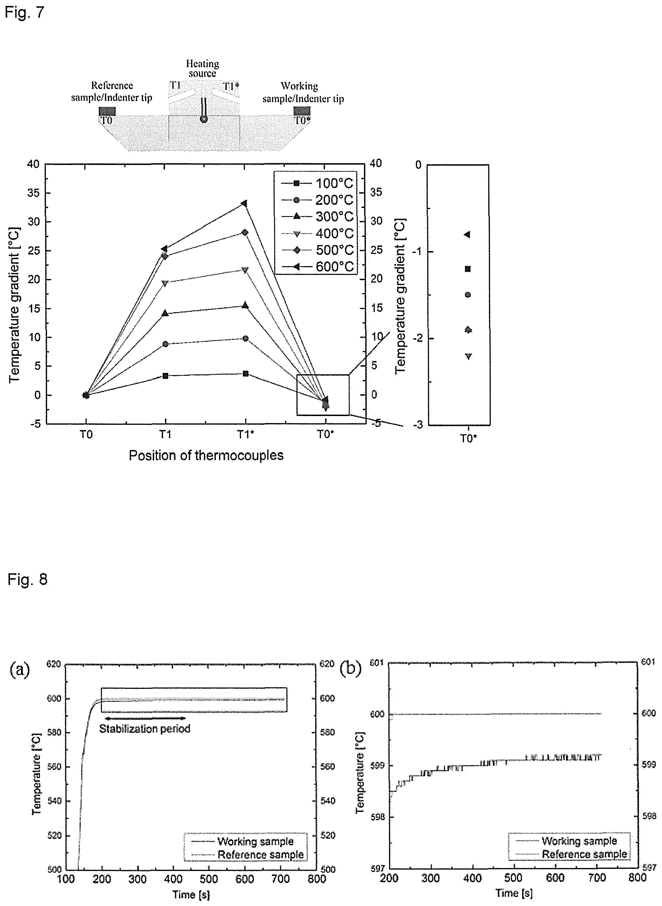

A further important consideration for realizing minimal drifts is the thermal profile in each sample support. This profile is shown in Fig. 7 which experimentally validates the ideal thermal profile along the sample support. Thus, a temperature measurement of the working sample T0* with an accuracy of ±2.5°C can be achieved by measuring the surface temperature of the reference sample at T0. T0* will not be measured during an actual experiment, but can be estimated from the other temperatures with high precision.

The asymmetry in the thermal profile at the center of the stage araised due to misalignment of the laser to the center only by fractions of millimeter and this is more pronounced at higher temperatures. It can also be seen from the profile in Fig. 7 that this misalignment did not influence the symmetric profile towards the ends of the stages due to the high thermal conductivity of the rods 14. Large differences of the temperatures recorded by the central thermocouples also explain the pronounced errors that can manifest in current day setups where calibrations are used especially at higher temperatures. The stabilization of the whole stage is achieved in 10 minutes and can be seen in the Fig. 8.

The stabilization is defined as the stability of all the thermocouple recordings to 0.1 °C over a period of at least 5 minutes. This in turn means the thermal stabilization at a particular distance on the stage as well as stabilization of heat flow through the stage as well. Constant heat flow in turn provides a stable regulated temperatures all around.

The performance aspects of the setup can be summarized in the table below.

| T in °C (Temperature at the reference thermocouple) | ΔT in °C (difference in temperature of thermocouple closest to the heat source and the one on the reference sample/tip | t in minutes (time taken to stabilize at this temperature) | ΔT \|(T0 - T0*)\| |
|---|---|---|---|
| 100 | 3.7 | 10 | 1.2 |
| 200 | 9.8 | 10 | 1.5 |
| 300 | 15.5 | 10 | 1.9 |
| 400 | 21.7 | 10 | 2.2 |
| 500 | 28.2 | 10 | 1.9 |
| 600 | 33.2 | 10 | 0.8 |

The above described experimental setup is used to mechanically characterize pure Copper (Cu) thin films by producing tensile specimens of 4µm thickness and 23µm gauge width till temperatures of 400°C. The presented Copper tensile samples were prepared through a photolithographic process, in which the geometry of the samples was generated by deposition of material on a photoresist structure. In this process, Copper was deposited by magnetron sputtering from high purity (99.999 at. %) Copper targets. After depositing Copper, the tensile samples were separated by dissolving the underlying photoresist layer.

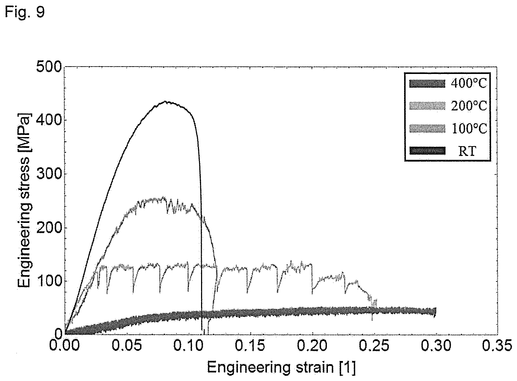

From the tensile tests compiled in Fig. 9, a reduction in tensile strength with increased elongations to fracture is observed for increasing temperatures. The change in tensile strength is attributed to two main effects caused by the elevated temperature. Firstly an increase in grain size followed by increased dislocation movement. Though the setup can reach testing temperatures of 800°C, Copper thin film samples are tested only till 400°C, due to the limitation of the displacement range of the indenter system used. The current displacement range of 32 µm was not sufficient to reach the fracture, even at 400°C as can be seen in Fig. 9 due to the flow properties of pure Copper at higher temperatures.

With the process of present invention it is possible to measure the temperatures directly in micro fracture deformation devices is introduced with a known and definite error of only ±2.5°C at 600°C. Maximum temperatures as high as 800°C can be achieved with this approach in the above described setup with minimal but known errors.

### List of reference signs:

- 1: device for the detection of physical properties of samples
- 2: sample holder for the working sample
- 3: sample holder for the mirror sample
- 4: clamp to hold the working sample
- 5: clamp to hold the mirror sample
- 6: heating supply
- 7: centre of the device
- 8, 8': measuring points T0, T0*
- 9, 9': measuring points T1, T1*
- 10, 10': measuring points T2, T2*
- 11, 11': measuring points T3, T3*
- 12, 12': measuring points T4, T4*
- 13: sample support
- 14: rod
- 15: plate
- 16, 17: holder plates
- 18: walls of measurement chamber

## Claims

1. Process for the temperature detection of a sample the temperature of which cannot be measured directly in a device (1) for measuring mechanical properties using two or more identical samples and a localised heat source (6), at least one of the two or more identical samples being a mirror sample and more at least another one of the two or more identical samples being a working sample, wherein
- the at least one mirror sample and the at least one working sample are arranged in the device (1) so that they are equidistant from the heat source (6) and so that the heat source (6) is symmetrically centered between the at least one mirror sample and the at least one working sample,
- the at least one mirror sample and the at least one working sample are heated simultaneously to the same temperature,
- the temperature of the at least one mirror sample is measured while deformation experiments are carried out at the at least one working samples.

2. Device for the detection of mechanical properties of samples comprising a sample support (13) with at least two sample holders (2, 3), at least one of the at least two sample holders being configured to accommodate a mirror sample (3) and at least another one the at least two sample holders being configured to accommodate a working sample (2), the device (1) further comprising a localised heat source (6) configured to simultaneously heat the mirror sample and the working sample, a measurement unit configured for measuring the temperature of the mirror sample (2) and one or more units configured for carrying out deformation experiments at the working sample, wherein the sample holders (2, 3 )are arranged so that in operation the mirror sample and the working sample are equidistant from the heat source (6) and the heat source (6) is symmetrically centered between the mirror sample and the working sample which results in the mirror sample and the working sample being heated to the same temperature by the heat source (6).

3. Device according to claim 2, wherein the heat source (6) comprises a laser system.

4. Device according to claims 2 or 3, wherein the device comprises at least one additional sample support (13), the at least one additional sample support comprising at least two sample holders (2, 3), at least one of the at least two sample holders being configured to accommodate a mirror sample and at least another one of the at least two sample holders being configured to accommodate a working sample, wherein the measurement unit is further configured for measuring the temperature of the mirror sample in the respective sample holder of the additional sample support.

5. Device according to claim 4, wherein one of the sample supports (13) can be moved in relation to another one.

6. Device according to claims 2 to 5, wherein the sample support (13) is or the sample supports (13) are arranged in a chamber (18) being shielded against external influence.

7. Device according to claim 6, wherein the chamber (18) is a vacuum chamber.

## Patentansprüche

1. Verfahren zur Temperaturerfassung einer Probe, deren Temperatur in einer Vorrichtung (1) zur Messung mechanischer Eigenschaften nicht direkt gemessen werden kann, unter Verwendung von zwei oder mehreren identischen Proben und einer angeordneten Heizquelle (6), wobei mindestens eine der zwei oder mehreren identischen Proben eine gespiegelte Probe und mindestens eine weitere der zwei oder mehreren identischen Proben eine Arbeitsprobe ist, wobei
- die mindestens eine gespiegelte Probe und die mindestens eine Arbeitsprobe in der Vorrichtung (1) so angeordnet sind, dass sie von der Heizquelle (6) äquidistant sind und dass die Heizquelle (6) symmetrisch zwischen der mindestens einen gespiegelte Probe und der mindestens einen Arbeitsprobe zentriert ist,
- die mindestens eine gespiegelte Probe und die mindestens eine Arbeitsprobe gleichzeitig auf dieselbe Temperatur erhitzt werden,
- die Temperatur der mindestens einen gespiegelte Probe gemessen wird, während an der mindestens einen Arbeitsprobe Verformungsversuche durchgeführt werden.

2. Vorrichtung zur Erfassung mechanischer Eigenschaften von Proben, umfassend einen Probenträger (13) mit mindestens zwei Probenhaltern (2, 3), wobei mindestens einer der mindestens zwei Probenhalter zur Aufnahme einer gespiegelte Probe (3) und mindestens ein weiterer der mindestens zwei Probenhalter zur Aufnahme einer Arbeitsprobe (2) ausgebildet ist, wobei die Vorrichtung (1) ferner umfasst eine angeordnete Heizquelle (6), die zur gleichzeitigen Erwärmung der gespiegelte Probe und der Arbeitsprobe ausgebildet ist, eine Messeinheit, die so konfiguriert ist, dass sie die Temperatur der gespiegelte Probe (2) misst, und eine oder mehrere Einheiten, die zum Durchführen von Verformungsexperimenten an der Arbeitsprobe konfiguriert sind, wobei die Probenhalter (2, 3) so angeordnet sind, dass im Betrieb die gespiegelte Probe und die Arbeitsprobe gleich weit von der Heizquelle (6) entfernt sind und die Heizquelle (6) symmetrisch zwischen der gespiegelte Probe und der Arbeitsprobe zentriert ist, was dazu führt, dass die gespiegelte Probe und die Arbeitsprobe von der Heizquelle (6) auf die gleiche Temperatur erhitzt werden.

3. Vorrichtung nach Anspruch 2, in welche die Heizquelle (6) ein Lasersystem umfasst.

4. Vorrichtung nach Anspruch 2 oder 3, wobei die Vorrichtung mindestens einen zusätzlichen Probenträger (13) umfasst, wobei der mindestens eine zusätzliche Probenträger mindestens zwei Probenhalter (2, 3) umfasst, wobei mindestens einer der mindestens zwei Probenhalter zur Aufnahme einer Spiegelprobe und mindestens ein anderer der mindestens zwei Probenhalter zur Aufnahme einer Arbeitsprobe ausgebildet ist, wobei die Messeinheit ferner zur Messung der Temperatur der Spiegelprobe in dem jeweiligen Probenhalter des zusätzlichen Probenträgers ausgebildet ist.

5. Vorrichtung nach Anspruch 4, in welcher einer der Probenträger (13) in Bezug auf einen anderen bewegt werden kann.

6. Vorrichtung nach einem der Ansprüche 2 bis 5, worin der Probenträger (13) oder die Probenträger (13) in einer Kammer (18) angeordnet sind, die gegenüber externen Einflüssen abgeschirmt ist.

7. Vorrichtung nach Anspruch 6, in welcher die Kammer (18) eine Vakuumkammer ist.

## Revendications

1. Procédé de détection de température d'un échantillon dont la température ne peut pas être mesurée directement dans un dispositif (1) pour mesurer des propriétés mécaniques à l'aide de deux échantillons identiques ou plus et d'une source de chaleur localisée (6), au moins l'un des deux échantillons identiques ou plus étant un échantillon de miroir et plus au moins un autre des deux échantillons identiques ou plus étant un échantillon de travail, dans lequel
- l'au moins un échantillon de miroir et l'au moins un échantillon de travail sont agencés dans le dispositif (1) de sorte qu'ils soient équidistants de la source de chaleur (6) et de sorte que la source de chaleur (6) soit centrée symétriquement entre l'au moins un échantillon de miroir et l'au moins un échantillon de travail,
- l'au moins un échantillon de miroir et l'au moins un échantillon de travail sont chauffés simultanément à la même température,
- la température de l'au moins un échantillon de miroir est mesurée pendant que des expériences de déformation sont effectuées au niveau de l'au moins un échantillon de travail.

2. Dispositif de détection de propriétés mécaniques d'échantillons comprenant un support d'échantillon (13) avec au moins deux porte-échantillons (2, 3), au moins l'un des au moins deux porte-échantillons étant configuré pour recevoir un échantillon de miroir (3) et au moins un autre desdits au moins deux porte-échantillons étant configuré pour recevoir un échantillon de travail (2), le dispositif (1) comprenant en outre une source de chaleur localisée (6) configurée pour chauffer simultanément l'échantillon de miroir et l'échantillon de travail, une unité de mesure configurée pour mesurer la température de l'échantillon de miroir (2) et une unité ou plus configurée pour effectuer des expériences de déformation au niveau de l'échantillon de travail, les supports d'échantillon (2, 3) étant agencés de sorte que, en fonctionnement, l'échantillon de miroir et l'échantillon de travail soient équidistants de la source de chaleur (6) et que la source de chaleur (6) soit centrée symétriquement entre l'échantillon de miroir et l'échantillon de travail avec comme résultat que l'échantillon de miroir et l'échantillon de travail soient chauffés à la même température par la source de chaleur (6) .

3. Dispositif selon la revendication 2, dans lequel la source de chaleur (6) comprend un système laser.

4. Dispositif selon les revendications 2 ou 3, le dispositif comprenant au moins un support d'échantillon supplémentaire (13), l'au moins un support d'échantillon supplémentaire comprenant au moins deux porte-échantillons (2, 3), au moins l'un des au moins deux porte-échantillons étant configuré pour recevoir un échantillon de miroir et au moins un autre des au moins deux porte-échantillons étant configuré pour recevoir un échantillon de travail, dans lequel l'unité de mesure est en outre configurée pour mesurer la température de l'échantillon de miroir dans le porte-échantillon respectif du support d'échantillon supplémentaire.

5. Dispositif selon la revendication 4, **caractérisé en ce que** l'un des porte-échantillons (13) peut être déplacé par rapport à un autre.

6. Dispositif selon les revendications 2 à 5, dans lequel le support d'échantillon (13) est, ou les supports d'échantillon (13) sont, agencé(s) dans une chambre (18) qui est protégée d'une influence externe.

7. Dispositif selon la revendication 6, dans lequel la chambre (18) est une chambre à vide.
